# EUROPÄISCHE PATENTSCHRIFT

(11) **EP 3 002 360 B1**
(45) Veröffentlichungstag und Bekanntmachung des Hinweises auf die Patenterteilung: **12.06.2019**
(21) Anmeldenummer: 15188058.0
(22) Anmeldetag: 02.10.2015
(51) Int. Cl.: D06F 58/20, D06F 58/10

(54) **ROHRKOPPELSYSTEM**
PIPE COUPLING SYSTEM
SYSTEME DE RACCORDEMENT DE TUYAU

(30) Priorität: 02.10.2014 AT 7442014
(43) Veröffentlichungstag der Anmeldung: 06.04.2016
(73) Patentinhaber: Jannach, Helmut, 8045 Graz (AT)
(72) Erfinder: Jannach, Helmut, 8045 Graz (AT); Kriegl, Maximilian, 8074 Raaba (AT)
(74) Vertreter: Puchberger & Partner Patentanwälte

(56) Entgegenhaltungen:
- EP-A2- 0 816 552
- WO-A1-2006/117138
- DE-A1- 2 144 766
- GB-A- 734 579
- JP-U- S61 126 995
- KR-A- 20140 031 544
- US-A- 283 771
- US-A- 2 890 066
- US-A- 3 092 403
- US-A- 3 953 057

## Beschreibung

Die Erfindung bezieht sich auf ein Rohrkoppelsystem, wie z.B. aus der US A 283 771 bekannt ist.

Bei generell bekannten Ausbildungen zum dichten Koppeln von Rohrstücken erfolgt das Koppeln über herkömmliche Druckluftkoppelsysteme, bei welchen mit Konen versehene Passstücke in ein Gegenrohrstück eingeschoben werden, wobei an den Gegenrohrstücken Rastkugel vorgesehen sind, die in eingeschobenem Zustand in eine Hinterschneidung des eingeführten Passstücks eingreifen. Die Rastkugeln sind dabei mittels in Achsrichtung verschiebbarer Hülsen festgelegt. Diese Ausbildungen haben den Nachteil, dass für das Einschieben der Rohrstücke immer beide Hände gebraucht werden, wobei mit einer Hand die Hülse zur Freigabe der Rastkugeln in Achsrichtung von der Mündung weg verschoben werden muss.

Bei einer Anlage zum Trocknen von Kleidungsstücken ist eine solche Ausbildung schon deshalb nachteilig, weil der andere Rohrteil mit dem darauf befindlichen Tragbügel samt angehängtem zu trocknenden Kleidungsstück in den Koppelteil eingesetzt werden muss, wonach dann bei vollständigem Einsetzten erst die Hülse zur Sicherung der Rastkugeln in Achsenrichtung zurück bewegt werden kann. Dies erfordert einiges Geschick, da bei nicht ordnungsgemäßen Einsetzen entweder die Hülse nicht zurück bewegt werden kann, was zu einen Herabfallen des Tragbügels samt darauf befindlichem Kleidungsstück führen kann, oder anderseits, weil beim Abnehmen aufgrund des Gewichts des Kleidungsstücks schon beim Wegschieben der Hülse aus der Halteposition ein Herausgleiten des Tragbügels aus der Kopplung erfolgen kann. Aus der GB734579 B1 geht eine Kopplungseinrichtung der eingangs genannten Art hervor, wobei ein Koppelorgan mit einem Flansch versehen ist und das andere Koppelorgan eine Aufnahme aufweist, welche ein seitlich offener quer zur Achsrichtung verlaufender Einstieg mit einer den Einstieg fortsetzenden Hinterschneidung ist, wobei der Außendurchmesser des Flansches dem Innendurchmesser der Hinterschneidung entspricht. Weiters ist eine in Achsrichtung verschiebbare Hülse an dem die Aufnahme aufweisenden Koppelstück vorgesehen, wobei die Hülse eine in Achsrichtung verlaufende Verlängerung aufweist, welche bei eingeschobenem Koppelstück mit Flansch an der Außenseite des Flansches zu liegen kommt und damit ein Herausgleiten des Flansches aus der Aufnahme verhindert. Für die gegenseitige Abdichtung ist an der Stirnseite des die Aufnahme aufweisenden Koppelstückes ein Dichtring vorgesehen, an welchem der Flansch quer zur Achsrichtung einschiebbar ist. Bei dieser Anordnung ist es leicht möglich, dass die Dichtung beim Einschieben des mit dem Flansch versehenen Rohrstückes beschädigt wird.

Die WO 2006/117138 A1 offenbart eine ähnliche Ausbildung, bei welcher allerdings der Flansch an seiner Umfangseite mit Passflächen versehen ist, die ein passgenaues Einschieben des Flansches in die Aufnahme verlangt. Damit ist allerdings eine Drehsicherung zwischen den beiden Kopplungsteilen gegeben, welche ein genaues Zusammenfügen der beiden Teile nötig macht, wobei auch in diesem Fall die Dichtung an der Stirnseite der Aufnahme vorgesehen ist, womit es auch hier zu Beschädigungen der Dichtung kommen kann.

Aus der US 3953057 A, der US 30924034, sowie der US 2 890 066 A gehen Kopplungseinrichtungen hervor, bei welchen die zu koppelnden Rohrstücke an den Enden zu Halbschalen geformt sind, welche im zusammengefügten Zustand das Rohr vervollständigen, wobei die beiden Halbschalen dann durch in Achslängsrichtung verschiebbare Hülsen gegeneinander fixierbar sind. Auch diese Ausbildungen erfordern ein genaues Einlegen und Zusammenfügen der beiden zu koppelnden Rohrstücke, da bei nicht genau übereinanderliegenden Teilen das Verschieben der äußeren Haltehülse nicht möglich ist.

Der Erfindung liegt nun die Aufgabe zur Grunde ein Rohrkoppelsystem für eine Anlage zum Trocknen von Kleidungsstücken zu schaffen, bei welchem einerseits ein einfaches Einhängens des Tragbügels möglich ist und anderseits auch ein sicherer Halt gewährleistet ist, selbst wenn das am Tragbügel befindliche zu trocknende Kleidungsstück heftiger bewegt wird.

Erfindungsgemäß wird diese Aufgabe durch die Merkmale des Patentanspruchs gelöst.

Damit ist ein leichtes Zusammenfügen der beiden Rohrstücke ermöglicht, wobei auf eine Dichtung nicht Rücksicht genommen zu werden braucht. Außerdem ist das Einfügen nicht lagegerichtet erforderlich, wobei eine gegenseitige Verdrehbarkeit der Rohrstücke gegeben bleibt, was bei einen Trocknungseinrichtung für Kleidungsstücke von Vorteil ist.
- Fig. 1: zeigt die einzelnen Teile des Koppelsystems voneinander getrennt.
- Fig. 2: ist eine Unteransicht des aufnehmenden Teiles.
- Fig. 3: ist eine Seitenansicht des aufnehmenden Teils.
- Fig. 4: gibt das Koppelsystem bei eingehängtem Tragbügel wieder.
- Fig. 5: veranschaulicht das in Betriebszustand befindliche Koppelsystem.
- Fig. 6: zeigt eine abgewandelte Ausbildung des Koppelorgans im Vertikalschnitt.
- Fig. 7: veranschaulicht die Festlegung der Enden des Tragbügels im Koppelorgan.
- Fig. 8: ist eine Vorderansicht des Halteringes.
- Fig. 9: gibt eine Seitenansicht desselben wieder.

Mit 1 ist ein Verteilerrohr bezeichnet, das mit einem Gewindeloch 1' versehen ist. In dieses Gewindeloch 1' ist ein Gewindestutzen 3' einschraubbar, welcher das Rohrkoppelsystem 3 trägt. An das Rohrkoppelsystem sind Tragbügel 2 angeschlossen von, welchen jedes über ein Verbindungsstück 2' mit einem Koppelorgan 4 verbunden ist. Dieses Koppelorgan 4 dient zum Einhängen in eine Aufnahme 5, welche an ihrem oberen Ende den Gewindestutzen 3' trägt. 6 bezeichnet eine Dichthülse, welche in axialer Richtung am Aufnahmestück 5 verschiebbar ist.

Das Koppelorgan 4 weist an seinem freien Ende einen Flansch 7 auf, welcher durch eine Nut 8 vom Koppelorgan 4 begrenzt ist. Zur Aufnahme des Koppelorgans 4 weist die Aufnahme 5 eine Hinterschneidung 9 auf, deren größter Durchmesser dem Durchmesser des Flansches 4 entspricht. Diese Hinterschneidung 5 weist einen Einschnitt 10 auf, der bis zur Hinterschneidung zurückreicht und einen Schlitz in der Aufnahme 5 freigibt, der der Breite des Flansches 7 entspricht. Die Wandung der Hinterschneidung setzt sich somit nur bis zum Einschnitt 10 fort, womit unterhalb der Hinterschneidung 9 Wangen 9' verbleiben, welche in die Nut 8 eingreifen. Die Wangen sind dabei parallel zur Hinterschneidung beim Einschnitt 10 offen, womit ein Einschieben des Kopplungsorgans 4 in die Aufnahme 5 ermöglicht ist.

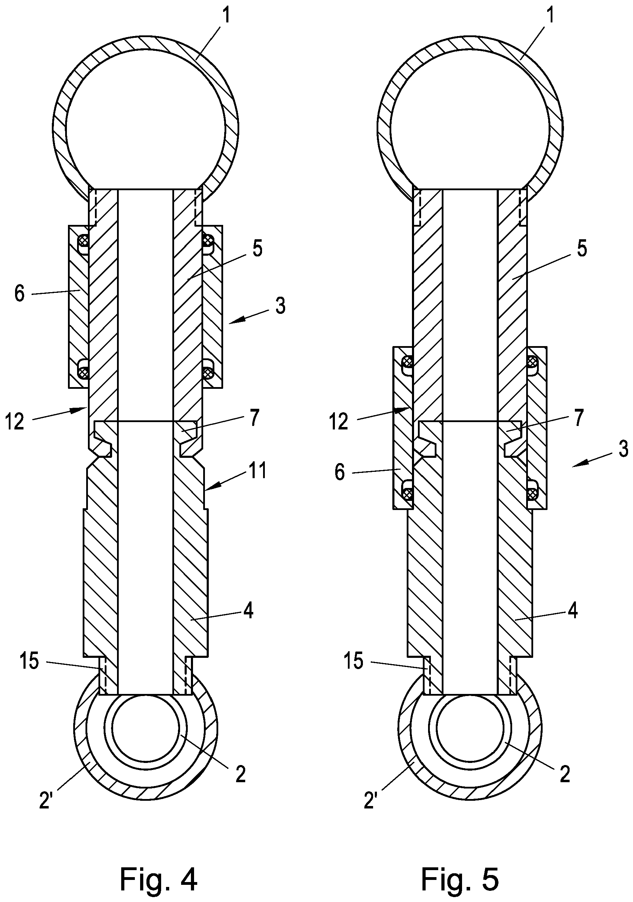

Am Koppelorgan ist eine Dichtfläche 11 und auf der Aufnahme 5 eine Dichtfläche 12 vorgesehen, welche gleichen Durchmesser aufweisen, wobei die Hülse 6 in axialer Richtung über die Verbindung zwischen Koppelorgan 4 und Aufnahme 5 verschiebbar ist. Dabei sind in der Hülse 6 Dichtungen 13, 14 vorgesehen, von welchen die dem Kopplungsorgan 4 nähere Dichtung im aufgeschobenen Zustand an der Dichtfläche 11 abdichtet und die zweite Dichtung 14 an der Dichtfläche 12 der Aufnahme 5 abdichtet. Siehe diesbezüglich Fig. 4.

Das Koppelorgan 4 ist über ein Gewindestück 15 in das Verbindungsstück 2' des Tragbügels 2 eingeschraubt und damit dicht mit dem Verbindungsstück 2 verbunden, welches seinerseits den Tragbügel 2 trägt.

Die Innenräume des Tragbügels 2, des Verbindungsstückes 2', des Koppelorgans 4, der Aufnahme 5 und des Verteilerrohres 1 sind miteinander leitend verbunden, womit im Verteilerrohr 1 zugeführte Luft in den Tragbügel 2 geleiten werden kann, aus welchem diese dann zu den zu trockneten Kleidungsstücken austreten kann.

Für den Gebrauch des Koppelsystems ist das Koppelorgan 4 am Verbindungsstück 2 bereits fix angebracht und auch die Aufnahme 5 ist fix in das Verteilerrohr 1 eingeschraubt.

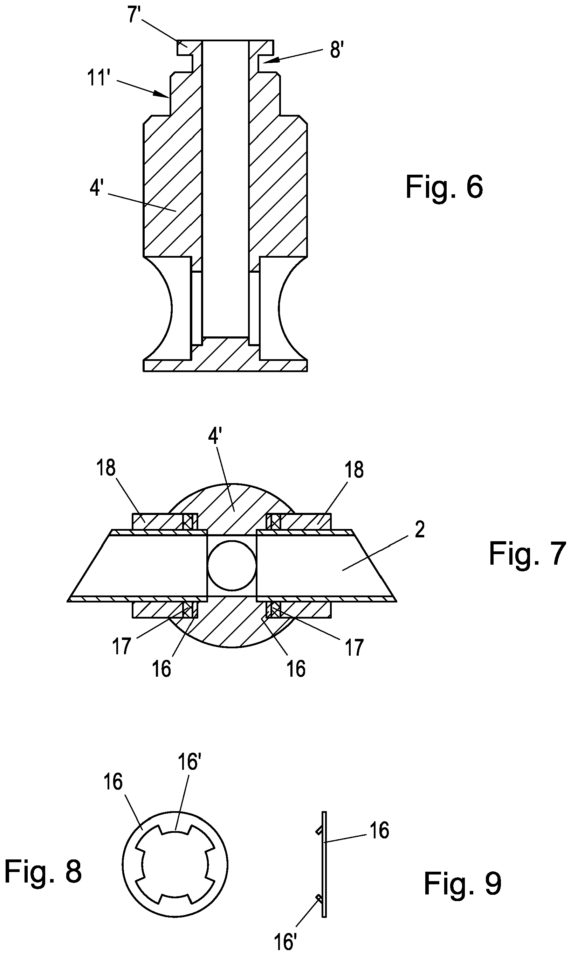

Bei dem Ausführungsbeispiel gemäß den Figuren 6 bis 9 ist anstelle des Verbindungsstückes 2' ein Koppelorgan 4' vorgesehen, welches im Bereich des Ansatzes zur Aufnahme der Rohre 2 größeren Durchmesser aufweist. Die Rohre 2 werden dann in die entsprechenden Aufnahmen von der Seite eingeschoben, wobei in diesen Aufnahmen ein Sicherungsring 16, eine Dichtung 17 und ein Haltering 18 für dieselbe vorgesehen sind. Der Sicherungsring 16 weist, wie die Figuren 8 und 9 zeigen, aus der Ringebene herausgebogene Haltekrallen auf, welche in Einschubrichtung des Rohrendes 2 nach hinten gerichtet sind. Sobald das Rohrende 2 eingeschoben ist, wird es gegen Herausgleiten durch die Krallen des Sicherungsringes festgehalten.

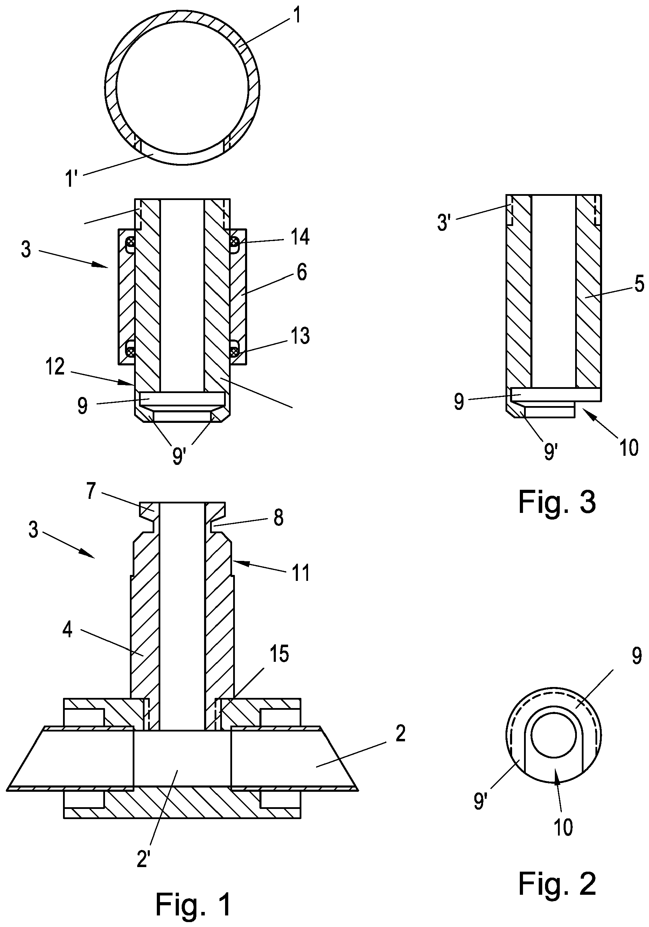

Es wird damit ein eigener Verbindungsteil (wie beim ersten Ausführungsbeispiel 2') eingespart, wobei auch bei dem Ausführungsbeispiel gemäß den Figuren 1 bis 5 das Festhalten der Rohrenden 2 in dem Verbindungsstück 2' in gleicher Weise über den Sicherungsring mit Haltekrallen 16', Dichtung 17 und Haltering 18 erfolgt.

Für die Funktion der Kopplung als solcher ist kein Unterschied gegeben, da die Dimensionierung der Flansche 7', der Nut 8' und der Passfläche 11' der in den Figuren 1 bis 5 gezeigten Ausbildung entspricht.

Wenn nun ein Kleidungsstück zu trocknen ist, wird dieses auf den Tragbügel 2 aufgehängt und der Tragbügel 2 dann über das Koppelorgan 4, 4' so in die Aufnahme 5 eingehängt, dass der Flansch 7, 7' in die Hinterschneidung 9 von der Seite her durch den Einschnitt 10 eingeschoben wird, wobei die Haltewangen 9' in die Nut 8, 8' eingreifen. Das Koppelorgan 4 wird damit mit der Aufnahme 5 koaxial ausgerichtet, wonach dann die Hülse 6 von dem in Fig. 4 wiedergegebenen zurückgeschobenen Zustand in den in Fig. 5 wiedergegebenen Dichtzustand verschoben ist. Damit ist dann eine dichte Verbindung zwischen dem Verteilerrohr 1 und dem Tragbügel 2 gegeben.

Das vorstehend beschriebene Koppelsystem kann dabei sowohl für Luft oder auch für Warmwasser angewendet werden, wobei bei einer Warmwassernutzung in nicht dargestellter Weise an den Tragbügeln Wasserableitungsrohre angeschlossen sind.

Das Abnehmen der bereits getrockneten Kleidungsstücke erfolgt dann in analoger umgekehrter Weise, das heißt, dass zunächst die Hülse 6 zur Gänze auf die Aufnahme 5 aufgeschoben wird, wonach dann das Kopplungsorgan 4 seitlich aus der Aufnahme 5 herausgenommen werden kann.

Sollte eine der Aufnahmen 5 zur Trocknung von Kleidungsstücken nicht benutzt werden, dann wird in nicht dargestellter Weise die Hülse 6 so weit von der Aufnahme 5 herabgeschoben, bis das die Dichtung 13 tragende Ende der Hülse frei ist, wonach in diese Hülse ein Stopfen einsetzbar ist, welcher dann die Aufnahme 5 abdichtet und damit ein unerwünschter Austritt vom Wärmeträgermedium verhindert ist, bzw. es kann ein dem Koppelorgan ähnliches Passstück eingesetzt werden, das keine Durchgangsbohrung aufweist.

## Patentansprüche

1. Rohrkoppelsystem (3), das aus zwei Rohrstücken (4, 5) besteht, von welchen das eine (4, 4') ein Koppelorgan und das andere eine Aufnahme (5) für das Koppelorgan aufweisen, wobei das Koppelorgan (4, 4') ein durch eine umlaufende Nut (8, 8') gebildeter Flansch (7, 7') ist, und die Aufnahme (5) ein seitlich offener, quer zur Achsrichtung verlaufender Einschnitt (10) mit einer den Einschnitt fortsetzenden Hinterschneidung (9) ist, wobei der Außendurchmesser des Flansches (7, 7') dem Innendurchmesser der Hinterschneidung (9) entspricht, und wobei in dem durch den Einschnitt verbliebene Rand (9, 9') des Rohrstückendes der Hinteschneidung gegenüberliegend in der Breite dem Durchmesser des Rohrstückes am Nutenboden entsprechend ausgeschnitten ist, wobei für eine Anlage zum Trocknen von Kleidungsstücken, bei welcher an einem an ein Warmluftgebläse angeschlossenen Verteilerrohr (1) aus Rohren gebildete Tragbügel (2) angeschlossen sind, welche mit dem Verteilerrohr (1) luftführend verbunden sind und Austrittsöffnungen für das Belüften und Trocknen der Kleidungsstücke aufweisen, von den beiden Rohrstücken (4, 5) eines am Verteilerrohr (1) und eines am Tragbügel (2) vorgesehen ist, wobei an den Außenumfängen der Rohrstücke (4, 5, 5') zylindrische Passflächen (10, 11) vorgesehen sind, auf welchen eine in Achsrichtung der Rohrstücke (4, 4', 5) auf einem der Rohrstücke auf das andere Rohrstück unter Überbrückung der Koppelstücke aufschiebbare Hülse (6) dichtend geführt ist, wobei die Dichtung durch zwei O-Ringe gebildet ist, die innen um die Hülse herumgeführt sind und an den Außenflächen der Rohrstücke (4, 5) dichtend anliegen.

## Claims

1. A pipe coupling system (3), which consists of two pipe sections (4, 5), of which one (4, 4') has a coupling member and the other has a mount (5) for the coupling member, wherein the coupling member (4, 4') is a flange (7, 7') formed by a circumferential groove (8, 8') and the mount (5) is a notch (10), which is open at the side, running transversely to the axial direction with an undercut (9) continuing the notch, wherein the external diameter of the flange (7, 7') corresponds to the internal diameter of the undercut (9), and wherein the edge (9, 9') of the pipe section end left by the notch is cut out opposite the undercut to a width corresponding to the diameter of the pipe section at the base of the groove,
wherein for a system for drying articles of clothing, in which coat hangers (2) formed from pipes are connected to a distributing pipe (1) connected to a hot-air blower, which coat hangers are connected in an air-conducting manner to the distributing pipe (1) and have outlet openings for the airing and drying of the articles of clothing, and one of the two pipe sections (4, 5) is provided on the distributor pipe (1) and one is provided on the coat hanger (2), wherein cylindrical fitting surfaces (10, 11) are provided on the outer circumferences of the pipe sections (4, 5, 5'), on which a sleeve (6), which can be pushed on one of the pipe sections onto the other pipe section while bridging the coupling pieces, is guided in a sealing manner in the axial direction of the pipe sections (4, 4', 5), wherein the seal is formed by two O-rings, which are guided internally around the sleeve and bear in a sealing manner against the outer surfaces of the pipe sections (4, 5).

## Revendications

1. Système de raccordement de tubes (3), lequel est constitué de deux pièces tubulaires (4, 5), parmi lesquelles l'une (4, 4') comporte un organe de raccordement et l'autre comporte un logement (5) pour l'organe de raccordement, l'organe de raccordement (4, 4') étant une bride (7, 7') formée d'une rainure (8, 8') périphérique et le logement (5) étant une entaille (10) latéralement ouverte, s'écoulant à la transversale de la direction axiale, pourvue d'une contre-dépouille (9) poursuivant l'entaille, le diamètre extérieur de la bride (7, 7') correspondant au diamètre intérieur de la contre-dépouille (9), et le bord (9, 9') de l'extrémité de la pièce tubulaire restant du fait de l'entaille étant découpé dans la largeur, à l'opposée de la contre-dépouille, en correspondance du diamètre de la pièce tubulaire sur le fond de rainure, pour un appui destiné au séchage de vêtements, lors duquel sont raccordés sur un tube distributeur (1) raccordé sur un ventilateur d'air chaud des cintres (2) conçus en tubes, lesquels sont reliés par guidage d'air avec le tube distributeur (1) et comportent des orifices de sortie pour la ventilation et le séchage des vêtements, parmi les deux pièces tubulaires (4, 5) l'une étant prévue sur le tube distributeur (1) et l'autre sur le cintre (2), sur les périphéries de raccordement des pièces tubulaires (4, 5, 5') étant prévues des surfaces d'ajustement périphériques (10, 11) sur lesquelles une douille (6) emboîtable dans la direction axiale des pièces tubulaires, (4, 4', 5) de l'une des pièces tubulaires sur l'autre pièce tubulaire en chevauchant les pièces de couplage est guidée en assurant l'étanchéité, l'étanchéité étant créée par deux joints toriques, qui sont guidés à l'intérieur autour de la douille et qui s'appuient de manière à assurer l'étanchéité sur les surfaces extérieures des pièces tubulaires (4, 5).
